# EUROPÄISCHE PATENTSCHRIFT

(11) **EP 4 027 838 B1**
(45) Veröffentlichungstag und Bekanntmachung des Hinweises auf die Patenterteilung: **01.11.2023**
(21) Anmeldenummer: 20771287.8
(22) Anmeldetag: 10.09.2020
(51) Int. Cl.: A47D 9/04

(54) **VORRICHTUNG ZUM ERZEUGEN EINER SCHAUKELBEWEGUNG AN EINER WIPPE, INSBESONDERE BABYWIPPE**
DEVICE FOR PRODUCING A ROCKING MOTION AT A ROCKER, IN PARTICULAR A BABY ROCKER
DISPOSITIF DE PRODUCTION D'UN MOUVEMENT DE BASCULEMENT SUR UN BERCEAU, EN PARTICULIER UN BERCEAU POUR BÉBÉ

(30) Priorität: 11.09.2019 DE 102019124467
(43) Veröffentlichungstag der Anmeldung: 20.07.2022
(73) Patentinhaber: 1st Baby GmbH, 24539 Neumünster (DE)
(72) Erfinder: REINERS, Hans-Josef, 41836 Hückelhoven (DE); MATYKA, Dominik, 10405 Berlin (DE); PAVEL, Christopher, 41363 Jüchen (DE)
(74) Vertreter: Brötz, Helmut
(86) Internationale Anmeldenummer: PCT/EP2020/075324
(87) Internationale Veröffentlichungsnummer: WO 2021/048275

(56) Entgegenhaltungen:
- DE-U1-202009 000 842
- DE-U1-202014 001 572
- US-A1- 2005 283 908

## Beschreibung

### Gebiet der Technik

Die Erfindung betrifft eine Vorrichtung zum Erzeugen einer Schaukelbewegung an einer Wippe, insbesondere Babywippe, mit einem Energieeinspeiser und mit einem von dem Energieeinspeiser bewegbaren Antreiber, der in einer sich wiederholenden Bewegung die Wippe antreibt, mit einem Sensor zur Ermittlung eines vom Bewegungszustand der Wippe beeinflussten Sensorsignals, mit einer Steuerschaltung zur Steuerung des Energieeinspeisers in Abhängigkeit vom Sensorsignal, wobei die Bewegung des Antreibers vom Sensorsignal getaktet ist und die Vorrichtung dazu geeignet ist, die Wippe mit der Frequenz ihrer freien Schwingung anzutreiben.

### Stand der Technik

Eine Vorrichtung zum Erzeugen einer Schaukelbewegung einer Wippe, insbesondere Babywippe, ist aus der WO 2008/048959 A2 vorbekannt. Die Vorrichtung besitzt einen Energieeinspeiser in Form eines Vibrationserzeugers, der mit einem Antreiber, beispielsweise einem von einem Magneten angetriebenen Anker, eine Bewegung auf die Babywippe übertragen kann. Es ist ein Sensor in Form eines Accellerometers vorgesehen, mit dem die Amplitude der auf die Babywippe übertragenen Schwingung ermittelbar ist. Über die gemessene Amplitude kann die vom Energieeinspeiser auf die Babywippe übertragene Leistung beeinflusst werden.

Die US 4,985,949 offenbart eine Antriebsvorrichtung zum Erzeugen einer Schaukelbewegung an einer Babywippe, wobei ein Exzenter, der von einem Drehantrieb angetrieben wird, unter einem Rand der Babywippe angreift, um die Babywippe in eine Schwingung zu bringen.
Aus DE 20 2014 001572 U1 ist eine Maschine bekannt, durch welche eine Wiege, in der ein Kind zum Schlafen gelegt wird, zum Schaukeln in der Eigenfrequenz der Wiege angeregt wird. Zu diesem Zweck wird eine Regelung vorgeschlagen, welche die Phasenlage der Anregung und ggf. die Amplitude der Anregung einstellt, um die Schaukelbewegung entsprechend zu verstärken, zu erhalten oder zu schwächen.
US 2005/0283908 A1 offenbart eine von einem Mikroprozessor gesteuerte Betätigungseinrichtung, die eine Babywiege bei beruhigenden Frequenzen schaukelt, die für das Gewicht eines in der Wiege abgelegten Babys optimiert sind. Zu diesem Zweck wird vorgeschlagen, dass das mikroprozessorbasierende System zunächst durch Einstellung verschiedener elektrischer Spannungen für einen Schwingungsantrieb kalibriert wird, um die geeignete Spannung zu ermitteln.
Aus DE 20 2009 000842 U1 ist ein System zur manuellen oder automatischen Erzeugung einer Schaukelbewegung an Mobiliar, insbesondere an Baby- und Kinderbetten, bekannt.

### Zusammenfassung der Erfindung

Ausgehend von dem beschriebenen Stand der Technik liegt der Erfindung die Aufgabe zugrunde, eine alternative Vorrichtung bereitzustellen, die geeignet ist, eine Wippe in ihrer natürlichen Schwingung zu halten.

Gelöst wird die Aufgabe durch die in den Ansprüchen angegebene Erfindung. Die Unteransprüche stellen nicht nur vorteilhafte Weiterbildungen der im Anspruch 1 angegebenen Lösung dar, sondern auch eigenständige Lösungen der Aufgabe.

Zunächst und im Wesentlichen wird vorgeschlagen, die Wippe, insbesondere Babywippe, Babyschale, Babysitz oder dergleichen mit ihrer Eigenfrequenz anzutreiben, sodass die Wippe, insbesondere Babywippe, Babyschale oder Babysitz mit ihrer Eigenschwingung schwingt. Hierzu ist ein Sensor vorgesehen, der an der Wippe deren Schwingbewegung abgreift beziehungsweise ein mit der Eigenfrequenz periodisches Sensorsignal erzeugt. Erfindungsgemäß wird die Bewegung des Antreibers, welcher an der Wippe angreift, mit dem Sensorsignal des Sensors getaktet. Die Wippe wird dadurch mit der Frequenz ihrer freien Schwingung angetrieben. In einer bevorzugten Ausgestaltung der Erfindung wird das Sensorsignal an einer Position des Antreibers auf seiner Bewegungsbahn gewonnen. Dabei ist insbesondere vorgesehen, dass der Sensor das Sensorsignal abgibt, wenn der sich bewegende Antreiber einen vorbestimmten Punkt auf seiner Bewegungsbahn passiert oder diesen Punkt erreicht. Am freien Ende des Antreibers kann ein Hub- oder Schubkopf angeordnet sein. Dieser kann einen vertikalen Hub ausüben. Der Kopf greift bevorzugt an einem Arm oder an einem Vorsprung der Wippe an, um am Angriffspunkt der Wippe einen Impuls in Vertikalaufwärtsrichtung zu geben. Dabei wird der Impuls nur dann ausgelöst, wenn der Antreiber einen vorbestimmten Punkt auf seiner Bewegungsbahn erreicht und/oder sich in Aufwärtsrichtung bewegt. Kurz nach dem oder zum selben Zeitpunkt, bei dem der Antreiber den Sensor in Aufwärtsrichtung beziehungsweise ein am Antreiber sitzender Auslöser den Sensor in Aufwärtsrichtung passiert hat, wird vom Energieeinspeiser kurzzeitig ein Impuls auf den Antreiber übertragen, welcher diesen Impuls auf die Wippe überträgt, so dass deren Reibungsverluste etc. ausgeglichen werden können. Es ist vorgesehen, dass der Auslöser bei der Bewegung des Antreibers zweimal am Sensor vorbeiläuft, zunächst bei einer Abwärtsverlagerung des Antreibers und nachfolgend bei einer Aufwärtsverlagerung des Antreibers. Die Steuerschaltung ist so ausgelegt, dass der Energieeinspeiser nur bei der Aufwärtsverlagerung des Antreibers einen den Antreiber beschleunigenden Impuls auf den Antreiber überträgt. Es ist vorgesehen, dass der Antreiber mittels einer Zug- oder Druckfeder in einer oberen Ruhestellung beaufschlagt wird, in der der Antreiber an einem oberen Anschlag anliegt. Dabei kann ein Dämpfungsglied, beispielsweise in Form eines O-Ringes vorgesehen sein, welches zwischen Antreiber und einer Gegenanschlagfläche liegt. Durch einen vertikal abwärts gerichteten Druck auf das freie Ende des Antreibers kann der Antreiber in Abwärtsrichtung verlagert werden. Dies erfolgt beim bestimmungsgemäßen Gebrauch dadurch, dass ein Abschnitt der Wippe, beispielsweise ein Arm, der oberhalb des Antreibers angeordnet ist, von oben auf einen Kopf des Antreibers gedrückt wird. Zusammen mit dem Abschnitt der Wippe wird der Antreiber nach unten verlagert, wobei sich die Feder spannt. Wird die Wippe freigegeben, so tendiert die Wippenauslenkung dazu, dass die Wippe frei zu schwingen beginnt. Einhergehend damit verlagert die gespannte Feder den Bewegungsübertrager in Vertikalaufwärtsrichtung, bis der Auslöser in Aufwärtsrichtung am Sensor vorbeiläuft. Die Steuerschaltung bestromt einen Elektromagneten, der den Antreiber in Aufwärtsrichtung beschleunigt. Die dabei entstehende Kraft wird über den Hubweg auf die Wippe übertragen, bis der Antreiber seine obere Endstellung einnimmt. Da der Hubweg des Arms der Wippe größer ist, als der Hub des Antreibers löst sich der vom Antreiber untergriffene Abschnitt der Wippe, beispielsweise der Arm vom Antreiber, so dass die Wippe ihre Restschwingung frei ausführen kann. Sie erreicht einen oberen Totpunkt und schwingt zurück, bis sie wieder auf den Kopf des Antreibers trifft und diesen wieder nach unten verlagert, bis im unteren Totpunkt eine Bewegungsumkehr erfolgt. Dabei überfährt der Auslöser den Sensor ein erstes Mal. Erst wenn der Sensor vom Auslöser bei der Aufwärtsbewegung des Antreibers ein zweites Mal überlaufen wird, wird erneut ein Impuls auf die Wippe übertragen. Die Energieeinspeisung vom Energieeinspeiser in den Antreiber erfolgt, wenn der Sensor eine Aufwärtsbewegung des Antreibers detektiert hat. Es wird als vorteilhaft angesehen, wenn der Antreiber einen ersten Magneten aufweist, der zur Erzeugung des Impulses von einem Elektromagneten kraftbeaufschlagt wird. Es kann sich um einen Ringmagneten handeln oder dergleichen, in welchem sich der Antreiber bewegen kann. Gemäß einer bevorzugten Ausgestaltung ist der Sensor ein Magnet-Sensor. Es handelt sich insbesondere um einen Hall-Sensor. Der Auslöser, der mit dem Sensor zusammenwirkt, ist bevorzugt ein Magnet, wobei die Polachse des Magneten parallel zur Bewegungsrichtung des Antreibers ausgerichtet ist, so dass dort beim Vorbeifahren des Auslösers am Sensor die Richtung des Magnetfeldes wechselt. Aus der Richtung des Wechsels des Magnetfeldes kann die Steuerschaltung ermitteln, ob der Auslöser in Aufwärts- oder Abwärtsrichtung am Sensor vorbeigefahren ist. Anstelle eines Magnetsensors kann aber auch ein optischer Sensor verwendet werden. Es können auch mehrere Sensoren verwendet werden, um die Bewegungsrichtung des Übertragers festzustellen. Beim Sensor handelt es sich insbesondere um eine ein oder mehrere Sensorelemente aufweisende Anordnung, mit der die Bewegung und des Antreibers ermittelbar ist, wenn beispielsweise ein Auslöser des Antreibers einen vorbestimmten Punkt auf seiner Bewegungsbahn erreicht oder überläuft. Die erfindungsgemäße Vorrichtung besitzt bevorzugt ein Gehäuse, das eine Zylinderform aufweist, wobei sich die Zylinderachse in der Vertikalrichtung erstreckt. Der an der Wippe angreifende Abschnitt des Antreibers kann pilzförmig ausgebildet sein. Hierzu kann der Antreiber mit einem pilzförmig ausgebildeten Hub- oder Schubkopf ausgestattet sein. Die Funktionsweise einer Variante der Vorrichtung ist die Folgende: Die Vorrichtung wird unter einen Arm einer Wippe, insbesondere einer Babywippe gestellt. Die Vorrichtung kann auf demselben Untergrund stehen, auf dem auch die Wippe ruht. Bei der Babywippe kann es sich um eine Schale handeln, die ein oder mehrere gerundete Kufen aufweisen. Über die Kufen kann die Wippe eine Schaukelbewegung durchführen. Die Frequenz der Schaukelbewegung hängt unter anderem von der Masse des in der Wippe liegenden Kindes ab. Der Arm hat in der Ruhestellung einen vertikalen Abstand vom Scheitel des Kopfes der Vorrichtung. Der Arm wird händisch nach unten gedrückt, bis er den Kopf berührt und weiter, bis der Kopf seine untere Endstellung erreicht hat. Der Arm wird dann losgelassen. Aufgrund der Auslenkung der Wippe tendiert sie zurückzuschwingen. Aufgrund der Federbeaufschlagung des Antreibers wird letzterer nach oben verlagert. Der Sensor ermittelt diese Aufwärtsverlagerung. Die Steuerschaltung bewirkt, dass der Energieeinspeiser einen vertikal aufwärts gerichteten Impuls auf den Antreiber überträgt. Letzterer wird, die Schaukelbewegung der Wippe beschleunigend, auf die Wippe übertragen. Der Antreiber erreicht dann seine obere Endstellung. Die bewegungsbeschleunigte Wippe schwingt weiter bis in ihre Schwingungsendstellung, wobei sich der Arm der Wippe vom Kopf der Vorrichtung löst. Beim Zurückschwingen trifft der Arm wieder auf den Kopf und verlagert ihn bis in die Endstellung. Danach erfolgt eine zweite Periode der in Eigenfrequenz angetriebenen Schwingung der Wippe. Es ist insbesondere vorgesehen, dass die Wippe während ihrer Schwingungsphase nur kurzzeitig von der Vorrichtung beaufschlagt wird, beispielsweise wenn ihre Schwingung den unteren Totpunkt erreicht hat. In einer Variante der Erfindung kann vorgesehen sein, dass die Vorrichtung fest an der Wippe befestigt ist. Der Antreiber kann sich dann an dem die Wippe tragenden Untergrund periodisch abstoßen. Es kann aber auch vorgesehen sein, dass der Antreiber eine Masse ist, die periodisch zur Eigenschwingung der Wippe sensorgesteuert hin und her verlagert wird, um so eine Schaukelbewegung der Wippe, an der die Vorrichtung befestigt ist, aufrechtzuerhalten.

### Kurze Beschreibung der Zeichnungen

Im Folgenden wird die Erfindung anhand von Ausführungsbeispielen näher erläutert. Es zeigen:
- Fig. 1: eine erste Funktionsstellung einer Wippe 1 und einer Antriebsvorrichtung 5, bei der die Wippe 1 in einer Gleichgewichtslage liegt,
- Fig. 2: eine Darstellung gemäß Figur 1, wobei die Wippe 1 derart im Gegenuhrzeigersinn verschwenkt worden ist, dass ihr Arm 2 eine Stoßfläche 7 des Kopfes 6 berührt,
- Fig. 3: eine Folgedarstellung zu Figur 2, wonach der Arm 2 derart weit abwärts verlagert worden ist, dass der Kopf 6 in seine untere Endstellung verlagert worden ist,
- Fig. 4: eine weitere Funktionsstellung, nach welcher der Kopf 6 nach oben beschleunigt worden ist, sich der Arm 2 vom Kopf 6 gelöst hat und die Wippe 1 ihre Schwenkendstellung erreicht hat, in der die vorherige Aufwärtsbewegung des Armes 2 in eine Abwärtsbewegung des Armes 2 wechselt,
- Fig. 5: in der Darstellung eines Schnittes durch die Vorrichtung 5 den in der Vorrichtung angeordneten Antriebsmechanismus in einer unteren Endlage des Kopfes 6 beziehungsweise eines Antreibers 10
- Fig. 6: eine Darstellung gemäß Figur 5, jedoch in der oberen Endlage des Kopfes 6 beziehungsweise des Antreibers 10,
- Fig. 7: eine Darstellung gemäß Figur 6, bei dem das Federelement 17 eine Druckfeder ist und das Dämpfungselement 16 auf einer Stufe eines den Antreiber 10 ausbildenden Stößels sitzt.

### Beschreibung der Ausführungsformen

Die in den Zeichnungen dargestellte Antriebsvorrichtung 5 hat die Eigenschaft, eine Wippe 1, insbesondere eine Babywippe, Babyschale, Babysitz oder dergleichen, synchron zu ihrer freien Eigenschwingung anzutreiben. Die Antriebsvorrichtung 5 liefert impulsweise jeweils für kurze Zeit die Energie nach, die die Wippe 1 bei einer Schwingungsperiode durch Reibung an die Umgebung verliert. Dabei ist die Hubbewegung eines Kopfes 6, der gegenüber einem Gehäuse 8 verlagerbar ist, über einen Antreiber 10 selbst mit der freien Schwingung der Wippe 1 synchronisiert. Im Ausführungsbeispiel ist die Wippe als Babyschale dargestellt. Sie kann aber auch von einem Babysitz oder einem anderen schwingfähigem System insbesondere zur Aufnahme eines Säuglings realisiert sein.

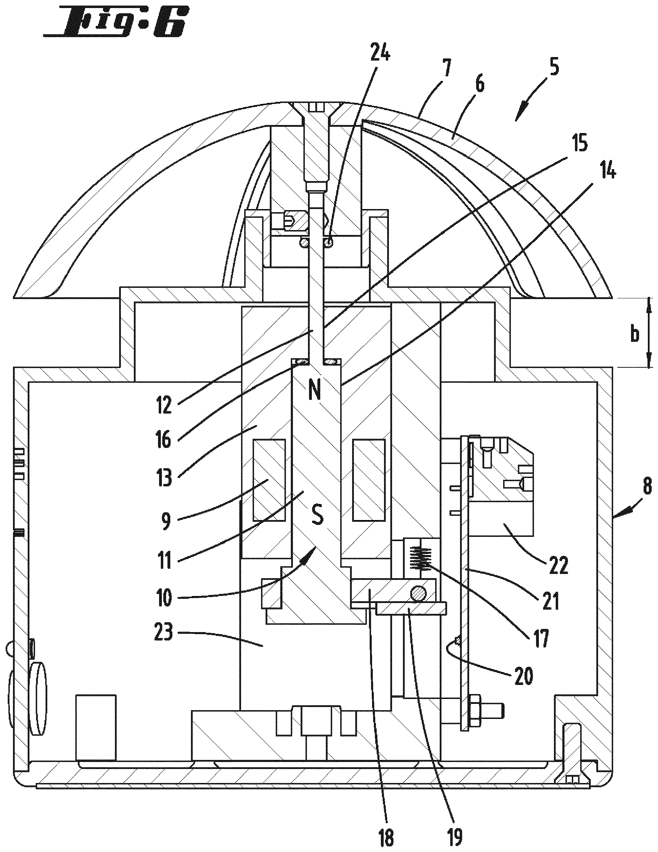

Beim Ausführungsbeispiel hat die Wippe 1 die Form einer Wanne mit einem einseitig abragenden Arm 2. Unter dem Arm 2 ist die Antriebsvorrichtung 5 derart angeordnet, dass eine Stoßfläche 7 des pilzförmigen Kopfes 6 einen Abstand a vom Arm 2 der Wippe 1 besitzt und der Kopf 6 eine in Figur 6 dargestellte obere Endstellung einnimmt.

Innerhalb des Gehäuses 8 ist ein Antreiber 10 zwischen einer oberen und einer unteren Endstellung beweglich gelagert. In seiner oberen Endstellung stützt sich der Antreiber 10 an einem Dämpfungselement 16 in Form eines O-Rings abstützt. Der Antreiber 10 besitzt eine längliche Gestalt und weist einen ersten Magneten 11 auf, dessen Polrichtung in Vertikalrichtung, also der Verlagerungsrichtung des Antreibers 10 weist.

Das obere Ende des Antreibers 10 wird von einem Stößel 12 ausgebildet, der in einer Bohrung 15 einer fest mit dem Gehäuse 8 verbundenen Halterung 13 geführt ist. Die Halterung 13 besitzt darüber hinaus einen Führungskanal 14, durch welchen der erste Magnet 11 laufen kann.

Der haubenförmige Kopf 6 mit seiner auf einem Kugelflächenabschnitt verlaufenden Stoßfläche 7 ist in seinem Zentrum mit dem freien Ende des Stößels 12 verbunden.

Der Antreiber 10 trägt einen Auslöser, der von einem zweiten Magneten 19 ausgebildet ist. Ein quer vom Antreiber 10 im Ausführungsbeispiel vom unteren Ende des Antreibers 10 abragender Träger 18 trägt den zweiten Magneten 19.

Es ist ein Federelement 17, im Ausführungsbeispiel eine Zugfeder vorgesehen, die am Antreiber 10 angreift, um den Antreiber 10 in der oberen Endstellung zu halten.

Der zweite Magnet 19 besitzt eine Polrichtung, die parallel zur Bewegungsrichtung des Antreibers 10 verläuft, also sich in Vertikalrichtung erstreckt.

An einer Leiterplatte 21 ist ein Sensor 20 angebracht. Der Sensor 20 ist ein Magnetsensor, insbesondere ein Hall-Sensor. Er liegt am Rande der Bewegungsbahn des Antreibers 10 beziehungsweise des Auslösers (zweiter Magnet 19).

Es ist eine elektrische Schaltung 22 vorgesehen, bei der es sich um eine Mikrokontroller-Schaltung oder um eine Mikrocomputer-Schaltung handelt, die programmierbar ist. In dieser Schaltung 22 ist ein Programm implementiert, welches, vom Sensor 20 gesteuert, einen Elektromagneten bestromt, der die Funktion eines Energieeinspeisers 9 für den Antreiber 10 besitzt.

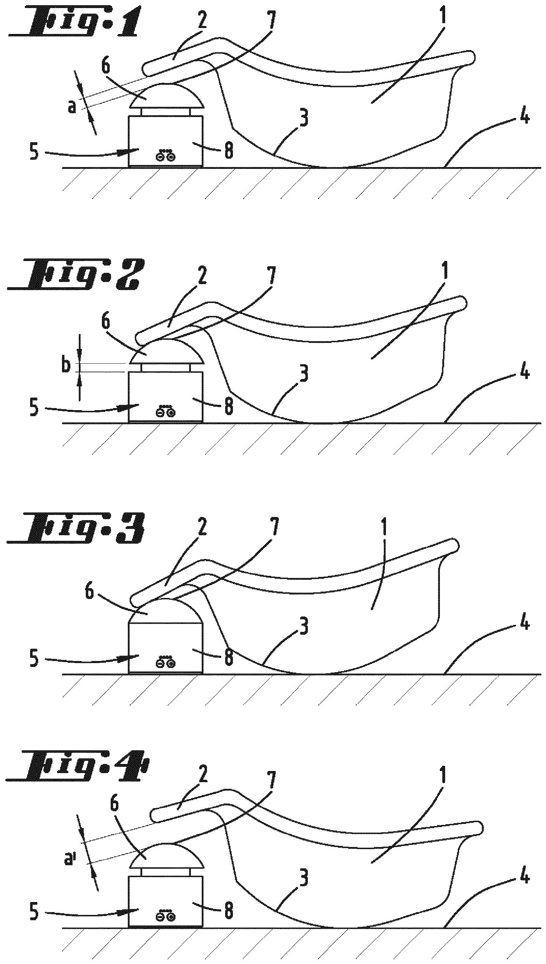

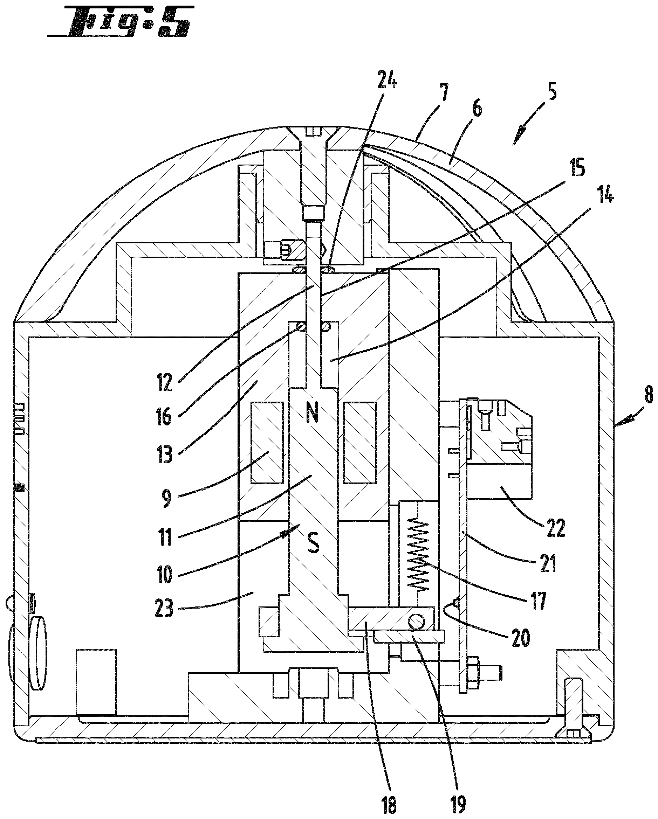

Wird die Wippe 1 ausgehend aus der in Figur 1 dargestellten Stellung beispielsweise manuell im Gegenuhrzeigersinn verschwenkt, so trifft ihr Arm 2 nach einer Strecke a auf die Stoßfläche 7 des Kopfes 6, bis die in der Figur 2 dargestellte Zwischenstellung erreicht wird. Eine manuelle Weiterverschwenkung der Wippe 1 führt dazu, dass sich der Kopf 6 um die Strecke b absenken kann, wobei dabei der Kopf 6 aus der dargestellten Betriebsstellung in die in Figur 5 dargestellte Betriebsstellung wechselt. Bei Erreichen der unteren Endstellung des Kopfes 6 stößt ein Dämpfungselement 24 gegen einen oberen Abschnitt der Halterung 13.

Bei dieser Abwärtsverlagerung des Antreibers 10 überläuft der zweite Magnet 19 den Sensor 20 in Abwärtsrichtung. Das vom zweiten Magneten 19 am Ort des Sensors 20 erzeugte Magnetfeld kann dabei seine Polrichtung in den Gegenuhrzeigersinn wechseln. Dies wird von der Schaltung 22 als Abwärtsverlagerung des Antreibers 10 erkannt.

Wird aus der in der Figur 5 dargestellten Betriebsstellung der Kopf 6 losgelassen, so beschleunigt das Federelement 17 den Antreiber 10 in Vertikalaufwärtsrichtung. Ausgehend von der in Figur 3 dargestellten Stellung folgt die Stoßfläche 7 dabei der Aufwärtsbewegung des Armes 2, bis der zweite Magnet 19 den Sensor 20 passiert. Dabei wechselt die Polung des Magnetfeldes am Orte des Sensors 20 in den Uhrzeigersinn, was die Schaltung 22 als Aufwärtsbewegung des Antreibers 10 interpretiert. Einhergehend damit wird der den Energieeinspeiser 9 ausbildende Elektromagnet bestromt, so dass eine ergänzende Kraft auf den ersten Magneten 11 in Aufwärtsrichtung aufgebracht wird. Die Kraft wird für eine bestimmte Zeit, insbesondere so lange aufgebracht, bis der Antreiber 10 in seine in Figur 6 dargestellte obere Endstellung erreicht hat. Während dieser Bewegungsphase des Antreibers 10 wird vom Energieeinspeiser 9 ein Impuls auf den Antreiber 10 übertragen. Dieser wirkt beschleunigend auf die Wippe 1. Nach Erreichen der oberen Endstellung verlässt der Arm 2 die Stoßfläche 7 des Kopfes 6 und erreicht nach einer Strecke a', die größer ist als die Strecke a, den in Figur 4 dargestellten oberen Totpunkt.

In einer zweiten Periode schwingt die Wippe 1 zurück, erreicht die in Figur 1 dargestellte Zwischenstellung der maximalen Winkelgeschwindigkeit und erreicht schließlich die in der Figur 3 dargestellte untere Totpunktstellung, in der die Vorrichtung 5 die in Figur 5 dargestellte Betriebsstellung einnimmt. Der periodische Schaukelprozess setzt sich dann in der oben beschriebenen Weise fort.

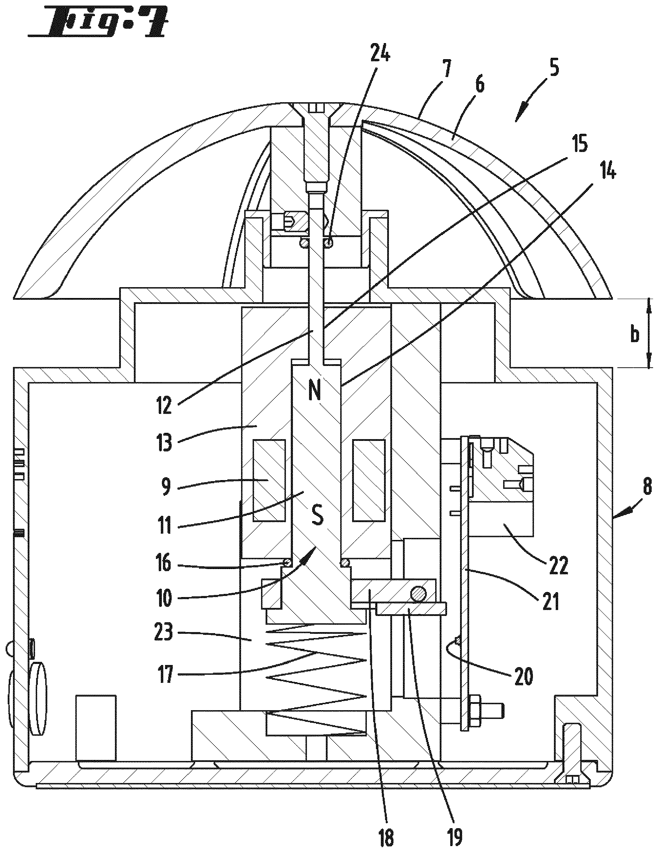

Das in der Figur 7 dargestellte Ausführungsbeispiel entspricht im Wesentlichen dem in den Figuren 5 und 6 dargestellten Ausführungsbeispiel. Das den Antreiber 10 beaufschlagende Federelement ist hier eine Druckfeder, die sich mit einem unteren Ende am Gehäuse abstützt und die sich mit ihrem oberen Ende an einer Unterseite des Antreibers 10 abstützt.

Mit der Bezugsziffer 23 ist ein Energiespeicher, bspw. eine Batterie, ein Akkumulator oder ein Kondensator bezeichnet, der von einer externen Leistungsversorgung elektrisch aufgeladen werden kann.

Der in der Beschreibung genannte Begriff Wippe umfasst sämtliche schwingfähige Systeme, die mit einer Vorrichtung der beschriebenen und beanspruchten Art in eine Schwingung versetzt werden können bzw. bei der mit der Vorrichtung eine einmal in Gang gesetzte Schwingung für eine längere Zeit aufrechterhalten werden kann.

### Liste der Bezugszeichen

| | | | |
|---|---|---|---|
| 1 | Wippe | a | Abstand, Strecke |
| 2 | Arm | a' | Strecke |
| 3 | Kufe | b | Strecke |
| 4 | Untergrund | | |
| 5 | Antriebsvorrichtung | | |
| 6 | Hub- oder Schubkopf | | |
| 7 | Stoßfläche | | |
| 8 | Gehäuse | | |
| 9 | Energieeinspeiser | | |
| 10 | Antreiber | | |
| 11 | erster Magnet | | |
| 12 | Stößel | | |
| 13 | Halterung | | |
| 14 | Führungskanal | | |
| 15 | Bohrung | | |
| 16 | Dämpfungselement | | |
| 17 | Federelement | | |
| 18 | Träger | | |
| 19 | zweiter Magnet | | |
| 20 | Sensor | | |
| 21 | Leiterplatte | | |
| 22 | Steuerschaltung | | |
| 23 | Energiespeicher | | |
| 24 | Dämpfungselement | | |

## Patentansprüche

1. Vorrichtung zum Erzeugen einer Schaukelbewegung an einer Wippe (1), insbesondere Babywippe,
mit einem Energieeinspeiser (9) und mit einem von dem Energieeinspeiser (9) bewegbaren Antreiber (10),
der in einer sich wiederholenden Bewegung die Wippe (1) antreiben kann,
mit einem Sensor (20) zur Ermittlung eines vom Bewegungszustand der Wippe (1) beeinflussten Sensorsignals,
mit einer Steuerschaltung (22) zur Steuerung des Energieeinspeisers (9) in Abhängigkeit vom Sensorsignal,
wobei die Bewegung des Antreibers (10) vom Sensorsignal getaktet ist und die Vorrichtung dazu geeignet ist, die Wippe (1) mit der Frequenz ihrer freien Schwingung anzutreiben, **dadurch gekennzeichnet, dass** der Energieeinspeiser (9) nur kurzzeitig nach der Abgabe des Sensorsignals einen Impuls auf den Antreiber (10) überträgt, wobei vorgesehen ist, dass der Antreiber (10) eine Vertikalbewegung durchführt, bei einer Abwärtsverlagerung bei seiner Vorbeiverlagerung am Sensor (20) ein erstes Sensorsignal erzeugt und bei einer anschließenden Aufwärtsverlagerung bei seiner Vorbeiverlagerung am Sensor (20) ein zweites Sensorsignal erzeugt, wobei nur das zweite Sensorsignal die Abgabe des Impulses auslöst, wobei weitere Impulse jeweils nur bei der Aufwärtsverlagerung auf den Antreiber (10) übertragen werden.

2. Vorrichtung nach Anspruch 1, **dadurch gekennzeichnet, dass** das Sensorsignal einer Position und/oder einer Bewegungsrichtung des Antreibers (10) auf seiner Bewegungsbahn entspricht, wobei insbesondere vorgesehen ist, dass der Sensor (20) das Sensorsignal abgibt, wenn der sich bewegende Antreiber (10) einen vorbestimmten Punkt auf seiner Bewegungsbahn erreicht oder daran vorbeifährt.

3. Vorrichtung nach einem der vorhergehenden Ansprüche, **gekennzeichnet durch** einen an der Wippe (1) angreifenden Hub- oder Schubkopf (6), der mit dem Antreiber (10) verbunden ist und der insbesondere einen vertikalen Hub auf die Wippe (1) übertragen kann, wobei insbesondere vorgesehen ist, dass der Hub- oder Schubkopf (6) pilzförmig ausgebildet ist und auf einem zylindrischen Gehäuse (8) sitzt.

4. Vorrichtung nach einem der vorhergehenden Ansprüche, **dadurch gekennzeichnet, dass** der sich in einer Vertikalrichtung bewegende Antreiber (10) eine von einem Federelement (17) beaufschlagte, insbesondere an einer Feder aufgehängte Masse aufweist, welche Masse durch Aufbringen einer äußeren, vertikalen Kraft derart verlagerbar ist, dass ein Sensorsignal vom Sensor (20) ausgelöst wird.

5. Vorrichtung nach einem der vorhergehenden Ansprüche, **dadurch gekennzeichnet, dass** der Antreiber (10) einen ersten, insbesondere permanenten Magneten (11) aufweist, der zur Erzeugung des Impulses von einem vom Energieeinspeiser (9) gebildeten Elektromagneten kraftbeaufschlagt wird.

6. Vorrichtung nach einem der vorhergehenden Ansprüche, **dadurch gekennzeichnet, dass** der Sensor (20) ein an einem Gehäuse (8) befestigter Magnet-, insbesondere Hall-Sensor ist, der mit einem zweiten, am Antreiber (10) befestigten Magneten (19) zusammenwirkt, welcher insbesondere derart am Antreiber (10) befestigt ist, dass die Steuerschaltung (22) aus einer Änderung des Magnetfeldes und insbesondere eines Polwechsels des Magnetfeldes im Sensor (20) die Bewegungsrichtung des Antreibers (10) erkennt.

7. Verfahren zum Erzeugen einer Schaukelbewegung an einer Wippe (1), insbesondere Babywippe, mit einem von einem Energieeinspeiser (9) bewegten Antreiber (10), der in einer sich wiederholenden Bewegung die Wippe (1) antreibt, wobei ein Sensor (20) ein vom Bewegungszustand der Wippe (1) beeinflusstes Sensorsignal ermittelt und eine Steuerschaltung (22) den Energieeinspeiser (9) in Abhängigkeit vom Sensorsignal steuert, wobei die Steuerschaltung (22) die Bewegung des Antreibers (10) mit dem Sensorsignal taktet, so dass die Wippe (1) mit einer Frequenz ihrer freien Schwingung angetrieben wird, **dadurch gekennzeichnet, dass** der Energieeinspeiser (9) nur kurzzeitig nach der Abgabe des Sensorsignals einen Impuls auf den Antreiber (10) überträgt, wobei vorgesehen ist, dass der Antreiber (10) eine Vertikalbewegung durchführt, bei einer Abwärtsverlagerung bei seiner Vorbeiverlagerung am Sensor (20) ein erstes Sensorsignal erzeugt und bei einer anschließenden Aufwärtsverlagerung bei seiner Vorbeiverlagerung am Sensor (20) ein zweites Sensorsignal erzeugt, wobei nur das zweite Sensorsignal die Abgabe des Impulses auslöst, wobei weitere Impulse jeweils nur bei der Aufwärtsverlagerung auf den Antreiber (10) übertragen werden.

## Claims

1. A device for producing a rocking motion at a rocker (1), in particular a baby rocker,
having an energy feed-in means (9) and a driver (10) which can be moved by the energy feed-in means (9) and can drive the rocker (1) in a repetitive motion, having a sensor (20) for ascertaining a sensor signal influenced by the state of motion of the rocker (1), having a control circuit (22) for controlling the energy feed-in means (9) depending on the sensor signal, wherein the movement of the driver (10) is timed by the sensor signal, and the device is suitable for driving the rocker (1) at the frequency of its free oscillation, **characterised in that**
the energy feed-in means (9) transmits a pulse to the driver (10) only briefly after the output of the sensor signal, wherein it is provided for the driver (10) to execute a vertical movement, to produce a first sensor signal while moving past the sensor (20) in a downward movement, and to produce a second sensor signal while moving past the sensor (20) in a subsequent upward movement, wherein only the second sensor signal triggers the output of the pulse, wherein further pulses are each transmitted to the driver (10) only during the upward movement.

2. The device according to Claim 1,
**characterised in that**
the sensor signal corresponds to a position and/or movement direction of the driver (10) on its trajectory, wherein it is provided in particular for the sensor (20) to output the sensor signal when the moving driver (10) reaches or moves past a predefined point on its trajectory.

3. The device according to any one of the preceding claims, **characterised by**
a lifting or pushing head (6) which acts on the rocker (1), is connected to the driver (10) and in particular can transmit a vertical stroke to the rocker (1), wherein it is provided in particular for the lifting or pushing head (6) to be mushroom-shaped and to sit on a cylindrical housing (8).

4. The device according to any one of the preceding claims, **characterised in that**
the driver (10) moving in a vertical direction has a mass which is loaded by a spring element (17), in particular suspended on a spring, and is movable by application of an external, vertical force such that a sensor signal from the sensor (20) is triggered.

5. The device according to any one of the preceding claims, **characterised in that**
the driver (10) has a first, in particular permanent magnet (11), to which force is applied by an electromagnet formed by the energy feed-in means (9) in order to produce the pulse.

6. The device according to any one of the preceding claims, **characterised in that**
the sensor (20) is a magnetic sensor, in particular a Hall effect sensor, which is fastened to a housing (8) and interacts with a second magnet (19) which is fastened to the driver (10) and in particular is fastened to the driver (10) such that the control circuit (22) detects the movement direction of the driver (10) from a change in the magnetic field and in particular a pole change of the magnetic field in the sensor (20).

7. A method for producing a rocking motion at a rocker (1), in particular a baby rocker, with a driver (10) which is moved by an energy feed-in means (9) and drives the rocker (1) in a repetitive motion, wherein a sensor (20) ascertains a sensor signal influenced by the state of motion of the rocker (1), and a control circuit (22) controls the energy feed-in means (9) depending on the sensor signal, wherein the control circuit (22) times the movement of the driver (10) with the sensor signal so that the rocker (1) is driven at a frequency of its free oscillation,
**characterised in that**
the energy feed-in means (9) transmits a pulse to the driver (10) only briefly after the output of the sensor signal, wherein it is provided for the driver (10) to execute a vertical movement, to produce a first sensor signal while moving past the sensor (20) in a downward movement, and to produce a second sensor signal while moving past the sensor (20) in a subsequent upward movement, wherein only the second sensor signal triggers the output of the pulse, wherein further pulses are each transmitted to the driver (10) only during the upward movement.

## Revendications

1. Dispositif, destiné à générer un mouvement de bascule sur un transat (1), notamment un transat pour bébé, pourvu d'une alimentation (9) énergétique et pourvu d'un entraîneur (10) susceptible d'être mis en mouvement par l'alimentation (9) énergétique, qui est susceptible d'entraîner le transat (1) dans un mouvement récurrent,
pourvu d'un capteur (20), destiné à détecter un signal de capteur influencé par l'état de mouvement du transat (1),
pourvu d'un circuit de commande (22), destiné à commander l'alimentation électrique (9) en fonction du signal de capteur,
le mouvement de l'entraîneur (10) étant cadencé par le signal de capteur et le dispositif étant apte à entraîner le transat (1) à la fréquence de son oscillation libre, **caractérisé en ce que** déjà brièvement après la délivrance du signal de capteur, l'alimentation (9) énergétique transmet une impulsion sur l'entraîneur (10), étant prévu que l'entraîneur (10) décrive un mouvement vertical, lors d'un déplacement vers le bas, lorsqu'il se déplace devant le capteur (20) génère un premier signal de capteur et lors d'un déplacement vers le haut consécutif, lorsqu'il se déplace devant le capteur (20), génère un deuxième signal de capteur,
seul le deuxième signal de capteur déclenchant la délivrance de l'impulsion, des impulsions supplémentaires n'étant respectivement transmises sur l'entraîneur (10) que lors du déplacement vers le haut.

2. Dispositif selon la revendication 1, **caractérisé en ce que** le signal de capteur correspond à une position et / ou à une direction de mouvement de l'entraîneur (10) sur sa trajectoire, étant notamment prévu que le capteur (20) délivre le signal de capteur lorsque l'entraîneur (10) en mouvement atteint un point prédéfini sur sa trajectoire ou passe devant-celui-ci.

3. Dispositif selon l'une quelconque des revendications précédentes, **caractérisé par** une tête élévatrice ou de poussée (6) s'engageant sur le transat (1), qui est reliée avec l'entraîneur (10) et qui est susceptible de transmettre notamment une course verticale sur le transat (1),
étant notamment prévu que la tête élévatrice ou de poussée (6) soit conçue en forme de champignon et repose sur un boîtier (8) cylindrique.

4. Dispositif selon l'une quelconque des revendications précédentes, **caractérisé en ce que** l'entraîneur (10) qui se meut dans une direction verticale comporte une masse contrainte par un élément à ressort (17), notamment accrochée à un ressort, laquelle masse est déplaçable par l'application d'une force extérieure verticale, de telle sorte qu'un signal de capteur soit déclenché par le capteur (20).

5. Dispositif selon l'une quelconque des revendications précédentes, **caractérisé en ce que** l'entraîneur (10) comporte un premier aimant (11), notamment permanent, qui pour générer l'impulsion est contraint par une force par un électroaimant constitué par l'alimentation (9) énergétique.

6. Dispositif selon l'une quelconque des revendications précédentes, **caractérisé en ce que** le capteur (20) est un capteur magnétique fixé sur un boîtier (8) notamment un capteur à effet Hall, qui coopère avec un deuxième aimant (19) fixé sur l'entraîneur (10), lequel est notamment fixé sur l'entraîneur (10) de telle sorte que le circuit de commande (22) identifie la direction de mouvement de l'entraîneur (10) à partir d'une modification du champ magnétique et notamment d'une inversion de polarité du champ magnétique dans le capteur (20).

7. Procédé, destiné à générer un mouvement de bascule sur un transat (1), notamment un transat pour bébé, pourvu d'un entraîneur (10) mis en mouvement par une alimentation (9) énergétique, qui entraîne le transat (1) dans un mouvement récurrent, un capteur (20) déterminant un signal de capteur influencé par l'état de mouvement du transat (1) et un circuit de commande (22) commandant l'alimentation (9) énergétique en fonction du signal de capteur, le circuit de commande (22) cadençant le mouvement de l'entraîneur (10) avec le signal de capteur, de telle sorte que le transat (1) soit entraîné à une fréquence de son oscillation libre, **caractérisé en ce que** déjà brièvement après la délivrance du signal de capteur, l'alimentation (9) énergétique transmet une impulsion sur l'entraîneur (10), étant prévu que l'entraîneur (10) décrive un mouvement vertical, lors d'un déplacement vers le bas, lorsqu'il se déplace devant le capteur (20) génère un premier signal de capteur et lors d'un déplacement vers le haut consécutif, lorsqu'il se déplace devant le capteur (20), génère un deuxième signal de capteur, seul le deuxième signal de capteur déclenchant la délivrance de l'impulsion, des impulsions supplémentaires n'étant respectivement transmises sur l'entraîneur (10) que lors du déplacement vers le haut.
